# EUROPEAN PATENT APPLICATION

(11) **EP 0 832 593 A1**
(43) Date of publication of application: **01.04.1998**
(21) Application number: 97113647.8
(22) Date of filing: 07.08.1997
(51) Int. Cl.: A47J 41/00

(54) **Container with stopper for liquids**

(30) Priority: 03.09.1996 JP 233448/96
(71) Applicant: NIPPON SANSO CORPORATION, Tokyo 105 (JP)
(72) Inventor: Kato, Takashi, c/o Nippon Sanso Corp., Minato-ku, Tokyo 105 (JP); Kuwana, Takeshi, c/o Nippon Sanso Corp., Minato-ku, Tokyo 105 (JP); Yamada, Masashi, c/o Nippon Sanso Corp., Minato-ku, Tokyo 105 (JP); Goto, Toru, c/o Nippon Sanso Corp., Minato-ku, Tokyo 105 (JP)
(74) Representative: Munk, Ludwig, Dipl.-Ing.

(57) **Abstract**

A liquid container with stopper comprises a liquid container main body (1) having an opening, a collar member (2) which is attached along a rim of this liquid container main body, a stopper (3) which adjustably opens and closes the above-mentioned opening and which screws into the above-mentioned liquid container main body or the above-mentioned collar member. For the purpose of preventing the transmission of liquid to stopper parts other than a dispensing spout and stopping the development of leaks when pouring the liquid contained in this container, this liquid container with stopper further comprises at least one vertical conduit (3a) provided in the external surface of the above-mentioned stopper; a passage (16) provided between the above-mentioned stopper and the above-mentioned liquid container main body or the above-mentioned collar member; and a ring-shaped drip guard (15) formed projecting on a side surface of the above-mentioned stopper above the above-mentioned vertical conduit.

## Description

### BACKGROUND OF THE INVENTION

### FIELD OF THE INVENTION

The present invention relates to a container with a stopper for liquids which can be used as a vacuum flask or a pitcher, and which comprises a liquid container main body having an opening, a collar member attached along a rim of the above-mentioned liquid container main body, and a stopper which can be screwed into the above-mentioned liquid container main body or the above-mentioned collar member and which freely opens and closes the above-mentioned opening.

### DESCRIPTION OF RELATED ART

As an example of a liquid container with a stopper, the container recited in Utility Model Application, First Publication, No. 60-123143 is known. The container with stopper disclosed in this application comprises a liquid container main body having an opening, a collar member attached along a rim of this liquid container main body, and a stopper which can be screwed into the above-mentioned liquid container main body or the above-mentioned collar member and which freely opens and closes the above-mentioned opening. In addition, the container main body has a seal-step section located at an internal position at a set distance from the edge of the above-mentioned opening and at which the diameter of the opening is reduced. The above-mentioned collar member has a screw thread into which the above-mentioned stopper is screwed and a ring-shaped seal. The above-mentioned stopper has a screw thread which is screwed into the screw thread of the above-mentioned collar member, and a sealing member which fits tightly into the above-mentioned seal-step section of the container main body when in a stoppered condition in which a sealing ring, which is able to fit tightly into the above-mentioned ring-shaped seal, is tightly fit into the above-mentioned ring-shaped seal. The above-mentioned sealing member is a material or is in a form selected so as not to substantially generate elastic pressure which biases the above-mentioned stopper toward the outside of the above-mentioned opening when in the above-mentioned stoppered condition.

However, for this conventional liquid container with stopper, when in an opened condition in which the stopper is rotated to an open direction and dispensing liquid such as water or hot water by inclining the liquid container main body, the dispensed water is not dispensed only through the dispensing spout but is also transmitted to the vicinity of the upper surface of the stopper and the problem of dripping liquid arises.

### SUMMARY OF THE INVENTION

In light of the above-mentioned conditions, the present invention has an object of providing a liquid container with stopper which prevents liquids from being transmitted to parts of the stopper other than the dispensing spout and thereby does not develop dripping.

The present invention is a container with a stopper for liquids which comprises a liquid container main body having an opening, a collar member attached along the rim of the above-mentioned liquid container main body, and a stopper which can be screwed into the above-mentioned liquid container main body or the above-mentioned collar member and which freely opens and closes the above-mentioned opening; wherein at least one conduit is provided in a vertical direction in the external side surface of the above-mentioned stopper, a passage for liquids is formed between the above-mentioned stopper and the above-mentioned liquid container main body or the above-mentioned collar member, and a ring-shaped drip guard is formed projecting from a side surface of the above-mentioned stopper above the above-mentioned vertical conduit.

By means of the above-mentioned structure, when the stopper is in an opened condition and liquid is dispensed by inclining the liquid container main body, liquid which flows out along the passage reaches the drip guard and is dispensed while the flow is regularized; no liquid apart from that in the passage passes through to the upper section of the stopper, and dripping of liquid can be prevented when liquids are being dispensed. In addition, since the liquid which flows out along the passage reaches the drip guard and is dispensed while the flow is regularized, it is possible to prevent the problem of a large amount of liquid being dispensed at once in such a way that it overflows from a vessel like a cup.

The liquid container with stopper of the present invention may also comprise, at a position directly below the above-mentioned drip guard of the above-mentioned stopper, ring-shaped seal-packing which applies pressure to the inner wall of the above-mentioned collar member or liquid container main body when the stopper is in a closed condition.

By means of the above-mentioned structure, when the stopper is closed, it is possible to prevent with certainty leakage of liquid stored in the container from a dispensing spout.

The liquid container with stopper of the present invention may comprise a cylindrically shaped dispensing spout at a position which is above the above-mentioned passage of the above-mentioned collar member. The above-mentioned drip guard is positioned below the upper edge of the above-mentioned dispensing spout when in a dispensing condition; is positioned above the lower edge of the above-mentioned dispensing spout when the stopper is in a closed condition; and is formed having a larger diameter than the inner diameter of the above-mentioned collar member.

By means of the above-mentioned structure, the liquid which flows out along the passage reaches the drip guard, and is dispensed by being guided along the dispensing spout while the flow is regularized; thereby, it is possible to prevent the problem of a large amount of liquid being dispensed at once in such a way that it overflows from a vessel like a cup.

The liquid container with stopper of the present invention may comprise a flap on the above-mentioned dispensing spout which is freely openable and closeable, and which opens when liquid is being dispensed.

By means of the above-mentioned structure, liquid which is dispensed has its flow made regular by means of both the drip guard and the flap, and it is possible to improve the effects of regularizing the flow when dispensing liquid. In addition, it is possible to close the mouth of the dispensing spout when liquid is not being dispensed, and thereby it is possible to keep the inside of the dispensing spout clean. In addition, by means of having a flap which is freely openable and closeable, it is extremely easy to wash the dispensing spout.

The liquid container with stopper of the present invention may comprise seal packing at the outer periphery of the lower edge section of the above-mentioned stopper. This seal packing presses against the reduced diameter section formed in the inner wall surface of the above-mentioned liquid container main body and prevents liquid from leaking from the above-mentioned passage, when the stopper is in a closed condition.

Furthermore, by means of comprising ring-shaped seal packing directly below the above-mentioned drip guard and which presses against the inner wall of the above-mentioned collar member or the above-mentioned liquid container main body, it is possible to improve sealing performance when the stopper is closed.

The liquid container with stopper of the present invention may comprise an extended section on the above-mentioned collar member which projects inward in a radial direction and additionally extends downward; the upper edge of the above-mentioned liquid container main body can be fixably inserted between the above-mentioned collar member and the above-mentioned extended section. In addition, this liquid container with stopper may comprise a screw thread provided on an inner surface of the above-mentioned extended section into which the screw thread of the above-mentioned stopper is screwed.

By means of the above structure, a screw thread can be formed during the molding process of the collar member during which the formation of a screw thread is easy; thereby, a process of forming a screw thread in the inner container is unnecessary, and manufacturing costs for the liquid container main body can be reduced.

The liquid container with stopper of the present invention may comprise ring-shaped drip guard packing on the above-mentioned drip guard. This ring-shaped drip guard packing presses against the inner surface of the above-mentioned collar member above the above-mentioned passage and prevents leakage of liquid at parts other than the above-mentioned passage.

By means of the above-mentioned structure, when dispensing liquid, it is possible to prevent the leakage of liquid from parts other than the dispensing spout by means of the drip guard packing making contact with the inner wall of the collar member except at the dispensing spout and, thereby, it is possible to prevent completely any dripping of liquid due to liquid seeping around the upper part of the stopper during dispensing.

### BRIEF DESCRIPTION OF THE FIGURES

Figure 1 is a cross section showing a first embodiment of the liquid container with stopper of the present invention.

Figure 2 is a diagram of a front of a stopper for a liquid container with stopper according to the first embodiment.

Figure 3 is a cross section of main parts showing the opened condition of the liquid container with stopper of the first embodiment.

Figure 4 is a cross section of the main parts showing the liquid dispensing condition of the liquid container with stopper of the first embodiment.

Figure 5 is a front view of an example of a variation of the stopper of this liquid container with stopper.

Figure 6 is a cross section of the main parts showing a condition in which a stopper of a variation of a first embodiment is fitted into a liquid container.

Figure 7 is a plane view showing a second liquid container with stopper of the present invention.

Figure 8 is a front view of the liquid container with stopper of the second embodiment.

Figure 9 is a cross section of the main parts of the liquid container with stopper of the second embodiment in an open condition.

Figure 10 a cross section of the main parts showing a variation of this liquid container with stopper.

Figure 11 is a cross section of the main parts showing a third embodiment of the liquid container with stopper of the present invention.

Figure 12 is a cross section of the main parts showing a fourth embodiment of the liquid container with stopper of the present invention.

### DESCRIPTION OF THE PREFERRED EMBODIMENTS

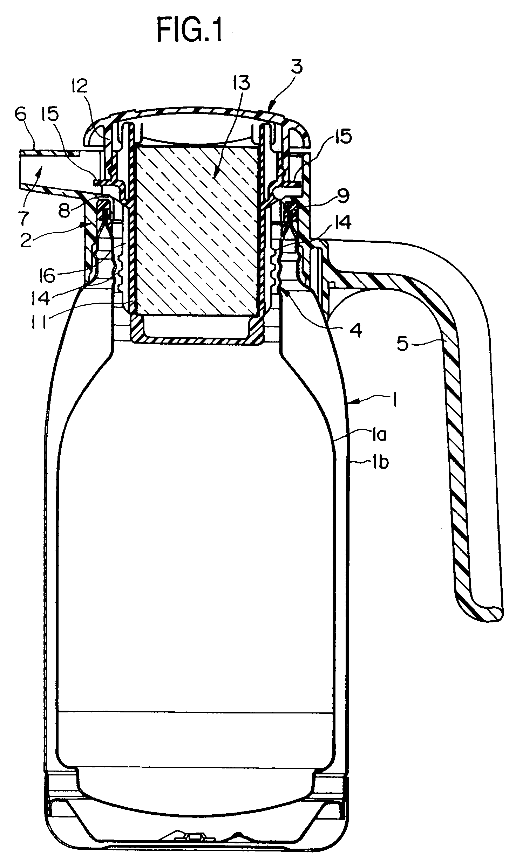

Figures 1 through 4 show a first embodiment of the liquid container with stopper of the present invention. This liquid container with stopper comprises a liquid container main body 1 having an opening, a collar member 2 which is attached to this liquid container with stopper 1 along the rim, and a stopper 3 which screws into the liquid container main body 1 or collar member 2 and which adjustably opens and closes the above-mentioned opening.

The liquid container main body 1, as shown in Figure 1, uses a metallic double-walled vacuum container having a structure in which an inner container 1a made of a metal such as stainless steel and an outer container 1b made of the same metal are put together leaving a space therebetween, and are integrally joined at their mouths, and the space between the inner and outer vessels is vacuum sealed. Moreover, the liquid container main body 1 is not limited to the present example, a thermally insulated container having a thermally insulated material may be used in which a thermally insulating material such as an organic foam, inorganic powder, or the like is charged into the space between the inner and outer containers; or a thermally insulated container having thermally insulating gas can be used in which a gas having thermal conductivity lower than air is injected into the space between the inner and outer containers. In addition, as the construction material for the container, in addition to metal, glass, synthetic resin, or the like may be used.

In the internal wall surface of the mouth section of the inner container 1a of this liquid container main body 1, a screw thread 4 can be formed into which stopper 3 can be screwed.

A collar member 2 made of synthetic resin is fitted to the opening of the liquid container main body 1. In this collar member 2, on the external surface of the lower section of base section 2a which is approximately cylindrical in shape and which is fixed to the liquid container main body 1, an "L" shaped handle 5, one end of which is directed downward, is formed. In addition, a dispensing spout 6 having a rectangular tube shape is provided in the top edge of the base section 2a at a position radially opposite the above-mentioned handle 5. The internal space 7 within this dispensing spout 6 forms a passage for dispensing the liquid contained within the liquid container main body 1.

The stopper 3 comprises a cylindrical shaped stopper barrel 11 with a bottom, a stopper upper section 12 which is attached in such a way as to close the opening of the upper section of the above-mentioned stopper barrel 11, and a thermal insulating material 13 which fills the inside of stopper barrel 11. In the external surface of the lower section of the stopper barrel 11, a screw thread 14 is formed which can be screwed into the screw thread 4 which is formed in the internal surface of the inner container 1a of the liquid container main body 1.

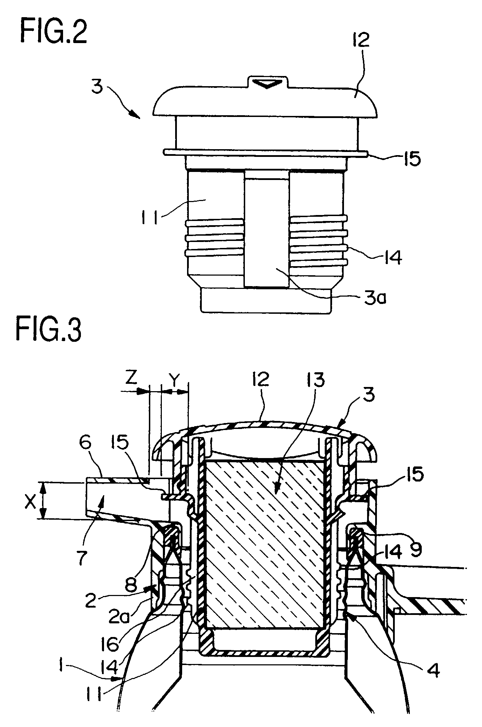

As shown in Figure 2, a vertical conduit 3a is formed in the stopper barrel 11 and this conduit 3a is one or a plurality of vertical band-shaped indented sections. The space between this vertical conduit 3a and a step section 8 of collar member 2, and between this vertical conduit 3a and the internal surface of inner container 1a forms a passage 16 through which liquid flows when dispensing liquid. This vertical conduit 3a is formed in alignment with a mark indicating the pouring direction and which is provided at a fixed position on the periphery of the stopper upper section 12. This mark which indicates the pouring direction can be a projection or indentation formed on the stopper upper section 12 or it may be an arrow, a letter, or the like formed on the top surface.

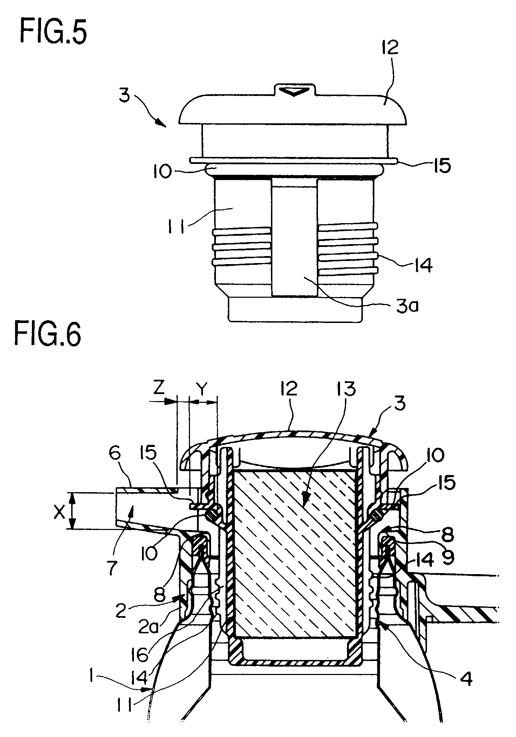

On the external surface of the approximately central section of the stopper barrel 11, a ring-shaped drip guard 15 is provided projecting in a radially outward direction. This drip guard 15 is formed at a position above the vertical conduit 3a of the stopper 3 such that it makes contact with liquid flowing from the passage 16 through internal space 7 of the dispensing spout 6 and is formed such that it has a diameter larger than the internal diameter of the upper edge of the passage 16. In this embodiment, the range of movement positions of this drip guard 15 from the closed condition of stopper 3 shown in Figure 1 to the open condition (the condition in which it is possible to dispense liquid) shown in Figure 5 are set so as to be within the range indicated by the vertical height of X of the dispensing mouth shown in Figure 3. In Figure 3, it is necessary for the width Y of the upper surface of the drip guard 15 to be 2 mm or more at the tip of drip guard 15 in order to have a suitable drip guard function. In addition, the space Z formed by the projecting edge of the drip guard 15 and the upper wall of the dispensing spout 6 is 3 mm or less and preferably 0∼2 mm so as to prevent leakage from this space.

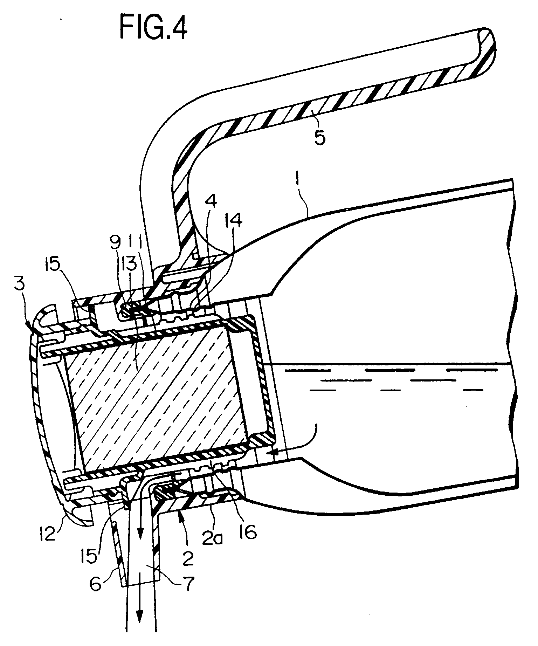

A liquid container constructed in this way is able to maintain the temperature of liquids by means of putting liquids such as cold water, hot water, tea, coffee, and the like inside and then closing the container with stopper 3. Dispensing liquids contained within the container is achieved by turning the stopper 3, which is in the closed condition, to the open condition, and aligning the vertical conduit 3a provided on the external surface of stopper 3 with the dispensing spout 6. Thereby, a condition is achieved in which it is possible to dispense liquids contained within the liquid container main body 1 via the passage 16 between the vertical conduit 3a of the stopper 3 and the step 8 of the collar member 2, and between the vertical conduit 3a of the stopper 3 and the surface of the inner wall of the inner container 1a. Then, by holding handle 5 and inclining the liquid container main body 1, liquid passes along passage 16 as shown in Figure 4, the flow is made regular by means of drip guard 15, the liquid passes through internal space 7 of dispensing spout 6, and is thereby dispensed.

The liquid container with stopper according to the present embodiment has a structure in which at least one vertical conduit 3a is provided in the external side surface of stopper 3; a passage 16 is formed between stopper 3 and liquid container main body 1, or between the stopper 3 and collar member 2; and a ring-shaped drip guard 15 is formed projecting from the side surface of the stopper 3 at a position above the vertical conduit 3a. Therefore, when the stopper is in an open condition, the liquid container main body 1 is inclined and liquid is dispensed, liquid which flows out of passage 16 reaches drip guard 15, and is dispensed from dispensing spout 6 while the flow is regularized. As a result, with the exception of liquid in passage 16 of stopper 3, no liquid seeps through to the upper part of stopper 3 and it is possible to prevent dripping when dispensing liquid.

In addition, since liquid flowing out of passage 16 reaches drip guard 15 and is dispensed from dispensing spout 6 while the flow is regularized, problems such as dispensing a large amount of liquid all at once in such a way that it overflows from a vessel like a cup can be prevented.

In addition, by means of having cylindrically shaped dispensing spout 6 at a position above passage 16 of collar member 2, and forming drip guard 15 is such a way that it is at a position below the upper edge of the dispensing spout when in a dispensing condition and in a position above the lower edge of the dispensing spout when the stopper is in a closed condition, and having a diameter larger than the inner diameter of collar member 2, it is possible for liquid which has flowed from passage 16 and had its flow regularized by drip guard 15 to be guided along dispensing spout 6 and dispensed, and to prevent side splashing of liquid during dispensing.

Moreover, with stopper 3 fitted with this type of drip guard 15 and as shown in Figures 5 and 6, it is possible to additionally provide ring-shaped seal packing 10 directly below drip guard 15 in such a way that it presses against the step section 8 of the collar member 2 when the stopper 3 is in a closed condition. In this way, by means of providing seal packing 10 directly below drip guard 15 of stopper 3, it is possible to improve sealing performance, to prevent leakage when carrying, to improve temperature maintenance performance and air tightness when the stopper is in a closed condition.

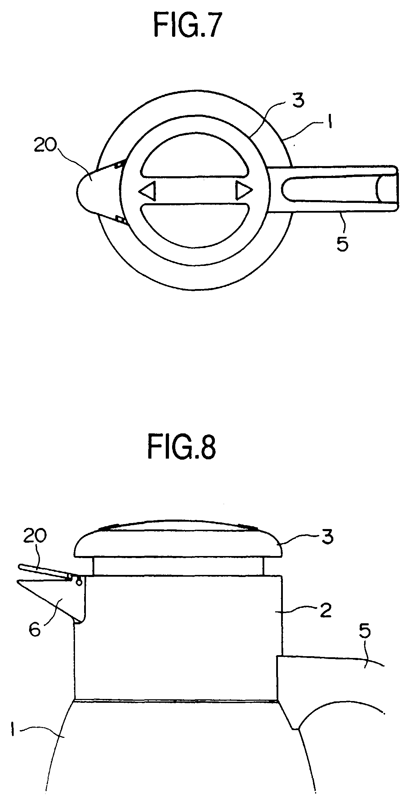

Figures 7 through 10 show a second embodiment of the liquid container with stopper according to the present invention. This liquid container with stopper is constructed having approximately the same structural elements as the liquid container with stopper shown in Figures 1∼4, and common elements have been given the same reference marks and their explanation will be omitted.

This liquid container with stopper according to this second embodiment is characterized by comprising a flap 20 on dispensing spout 6 which is provided on the upper edge of collar member 2. This flap 20 opens by means of water pressure when liquid is being dispensed. This flap 20 is provided above drip guard 15.

In addition, this liquid container with stopper comprises seal packing 19 on the external surface of the lower edge section of stopper 3, and, when stopper 3 is in a closed condition, this seal packing 19 presses against the reduced diameter section 1c which is provided on inner container 1a.

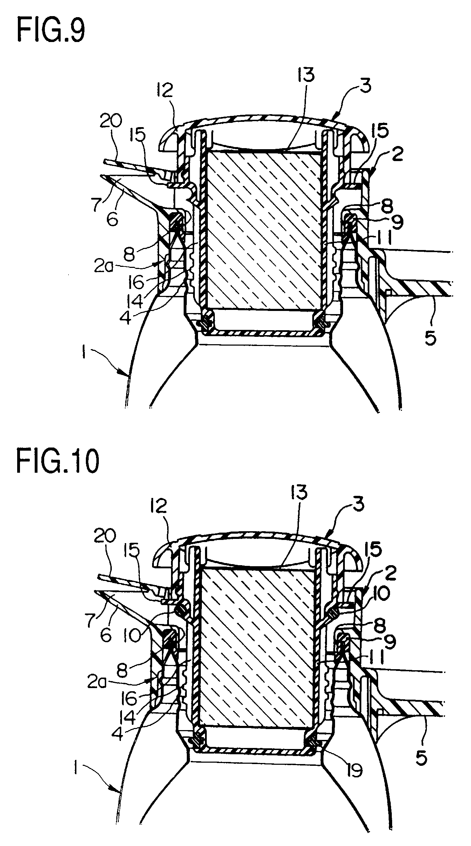

Moreover, Figure 10 shows a variation in which the ring-shaped seal packing 10 is provided at a position directly below the drip guard 15 of stopper 3 of the liquid container with stopper shown in Figure 9.

The liquid container with stopper according to this embodiment obtains almost the same effects as the liquid container with stopper according to the above-mentioned first embodiment. In addition, by means of providing flap 20 which opens due to water pressure when dispensing liquid, the flow of liquid being dispensed is regularized by means of drip guard 15 and flap 20, and, therefore, it is able to obtain improved effects in regularizing the flow when dispensing liquid. In addition, when not dispensing, it is possible to leave the mouth of dispensing spout 6 in a closed condition and, thereby, it is possible to keep the internal space 7 of dispensing spout 6 cleaner. In addition, by means of possessing a freely openable and closeable flap 20, cleaning of dispensing spout 6 is made extremely easy.

In addition, by means of possessing seal packing 19, on the external surface of the lower section of stopper 3, which presses against the reduced diameter section 1c provided on the inner container 1a when the stopper 3 is closed, there is no leakage of liquid contained within the liquid container main body 1 even when the container is inclined. In addition, by means of possessing seal packing 10 which presses against step section 8 of the collar member 2, it is possible to further improve sealing properties when the stopper is in a closed condition.

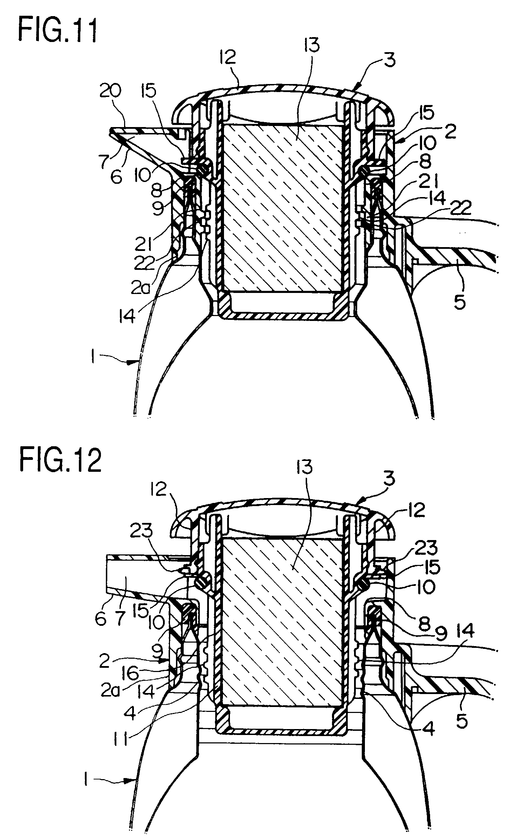

Figure 11 shows a third embodiment of the liquid container with stopper according to the present invention. This liquid container with stopper is constructed comprising almost the same structural elements as the liquid container with stopper according to the above-mentioned second embodiment and common elements have been given the same reference marks and their explanation will be omitted.

The liquid container with stopper according this third embodiment comprises an extended section 21 on collar member 2, which projects in a radially inward direction and additionally extends downward; and a screw thread 22 on the inner surface of the extended section 21 into which the screw thread 14 of stopper 3 is screwed. Furthermore, the upper edge of the liquid container main body is fixably inserted in between the extended section 21, and the collar member 2.

The liquid container with stopper according to this third embodiment obtains almost the same effects as the liquid container with stopper according to the above-mentioned second embodiment. In addition, by means of comprising an extended section 21 on collar member 2 which projects in a radially inward direction and additionally extends downward; a screw thread 22 on the inner surface of the extended section 21 into which the screw thread 14 of stopper 3 is screwed; and a structure in which the upper edge of the liquid container main body is fixably inserted between the extended section 21 and the collar member 2, it is possible to reduce the manufacturing costs for the liquid container main body 1 since the screw thread 22 can be formed during the molding process of the collar member 2 when screw thread formation is easy and, thereby, a process of forming a screw thread in the inner container 1a is unnecessary.

Figure 12 shows a fourth embodiment of a liquid container with stopper according to the present invention. This liquid container with stopper is constructed comprising almost the same structural elements as the liquid container with stopper according to the above-mentioned first embodiment, and common elements have been given the same reference marks and their explanation will be omitted.

The liquid container with stopper according to this fourth embodiment is characterized by comprising ring-shaped drip guard packing 23 on drip guard section 15, and this ring-shaped drip guard packing 23 makes contact with the inner surface of collar member 2 above passage 16 and prevents leaks at sections other than passage 16.

This drip guard packing 23 fits into a ring-shaped groove formed between projection 24 which is provided on the external surface of part of the tip of a cylindrical section which extends down from the lower surface of stopper upper section 12, and drip guard 15 which is provided on the central section of stopper barrel 11. The external diameter of this drip guard packing 23 is set so as to be larger than the internal diameter of base 2a of collar member 2 such that it is slideable and makes air tight contact with the inner wall of collar member 2 except at dispensing spout 6 during the opening and closing movement of stopper 3.

The liquid container with stopper according to this fourth embodiment obtains almost the same effects as the liquid container with stopper of the above-mentioned first embodiment. In addition, by possessing ring-shaped drip guard packing 23 on drip guard section 15, and ring-shaped drip guard packing 23 making contact with the inner surface of collar member 2 above passage 16 and preventing leaks at sections other than passage 16, when dispensing liquid, drip guard packing 23 makes contact with the inner wall of the collar member 2 except at dispensing spout 6 and, thereby, leaking from parts other than dispensing spout 6 is prevented, and it is possible for there to be absolutely no dripping due to liquid seeping through to the upper section of stopper 3 during dispensing.

## Claims

1. A liquid container with stopper comprising:
a liquid container main body having an opening;
a collar member which is attached along a rim of said liquid container main body; and
a stopper which adjustably opens and closes said opening and is screwed into either one of said liquid container main body or said collar member;
wherein at least one vertical conduit is provided in an external surface of a side of said stopper;
a passage is formed between said stopper and one of either of said liquid container main body or said collar member; and
a ring-shaped drip guard is formed projecting form a side surface of said stopper above said vertical conduit.

2. A liquid container with stopper according to claim 1 comprising:
ring-shaped seal packing provided directly below said drip guard of said stopper and which presses against an inner wall of either one of said collar member or said liquid container main body when said stopper is in a closed condition.

3. A liquid container with stopper according to claim 1 further comprising:
a tube-shaped dispensing spout provided at a position above said passage of said collar member;
wherein said drip guard is formed so as to be in a position lower than the upper edge of said dispensing spout when in a dispensing condition, and in a position above a lower edge of said dispensing spout when said stopper is in a closed condition, and an external diameter of said drip guard is larger than an inner diameter of said collar member.

4. A liquid container with stopper according to claim 1 further comprising:
a tube-shaped dispensing spout provided at a position above said passage of said collar member; and
a flap provided freely openable and closeable on said dispensing spout which opens when dispensing liquid.

5. A liquid container with stopper according to claim 1 further comprising:
seal packing which is provided on an external periphery of a lower edge section of said stopper; which presses against a reduced diameter section, formed in a surface of an inner wall of said liquid container main body, when said stopper is in a closed condition; and which prevents leakage of liquid into said passage.

6. A liquid container with stopper according to claim 1, further comprising:
an extended section, which projects radially inwardly and additionally extends downward, provided on said collar member;
an upper edge section of said liquid container main body which is fixably inserted in between said collar member and said extended section; and
a screw thread provided in an inner surface of said extended section into which a screw thread provided in said stopper can be screwed.

7. A liquid container with stopper according to claim 1 further comprising:
ring-shaped drip guard packing provided on said drip guard which makes contact with an inner surface of said collar member above said passage and which prevents leakage at any part other than at said passage.
